# DEMANDE DE BREVET EUROPEEN

(11) **EP 4 755 965 A1**
(43) Date de publication de la demande: **10.06.2026**
(21) Numéro de dépôt: 25221934.0
(22) Date de dépôt: 09.12.2025
(51) Int. Cl.: C08K 3/013, C08K 7/02, C08L 77/02, B01J 2/00, C08K 3/26

(54) **COMPOSITION POUR UN MATERIAU DURABLE**

(30) Priorité: 09.12.2024 FR 2413688
(71) Demandeur: Innotech, 56450 Theix-Noyalo (FR)
(72) Inventeur: MENETREY, Luc, 86280 Saint-Benoît (FR); DIORE, Cyr, 56450 THEIX-NOYALO (FR)
(74) Mandataire: Aquinov

(57) **Abrégé**

L'invention porte sur une composition pour former un matériau durable comprenant une matrice de polymère thermoplastique comprenant du polyamide PA11 selon un pourcentage compris entre 80 et 99.9% en poids de masse totale et au moins une charge.

Selon l'invention, la au moins une charge comprend des fibres de byssus selon un pourcentage compris entre 0.1 et 20%, de préférence entre 0.5 et 10% en poids de masse totale.

## Description

La présente invention concerne le domaine technique des compositions pour un matériau durable.

Dans le domaine ci-dessus, il est connu des compositions comprenant des polymères thermoplastiques d'origine renouvelable. L'utilisation de tels polymères permet de former des matériaux écologiquement cohérents utilisables dans de nombreux domaines industriels pour la fabrication de pièces finies plus respectueuses de l'environnement. Cependant les compositions connues présentent des limites pour les étapes de mises en forme et notamment pour des étapes d'injection à haute température.

La demande de brevet FR 2 982 269 présente une composition comprenant du polyamide PA11 mélangé à de la farine végétale telle qu'une farine de bois.

Le polyamide PA11 est fabriqué à partir d'une matière première renouvelable et biosourcé, l'huile de ricin, il se distingue par ses propriétés exceptionnelles, qui lui permettent d'être utilisé dans de nombreuses applications. Il offre une excellente résistance aux produits chimiques (notamment aux hydrocarbures), une facilité de mise en œuvre, une large plage de températures d'utilisation (-40 C à +130 C), une grande stabilité dimensionnelle (durabilité), un faible taux de reprise à l'eau et une faible densité par rapport aux autres polyamides.

Depuis des décennies, le polyamide PA11 est adopté par diverses industries à travers le monde : l'automobile (circuit électrique, connecteur, câble...), le transport (réservoir essence, tuyau hydraulique), le textile, les emballages médicaux, l'agro-alimentaire, la pétrochimie et le gaz, ainsi que l'électronique. Des industries telles que l'aviation, la robotique, l'automobile ou l'électronique exigent des matériaux légers et résistants. La transformation du polyamide PA11 est aisée, s'effectuant avec la plupart des technologies disponibles, telles que l'extrusion, l'extrusion-soufflage, le moulage par injection, le rotomoulage, ou encore l'impression additive.

Une matrice formée par du polyamide PA11 peut intégrer de nombreux additifs et agents de remplissage, tels que plastifiants, stabilisants, colorants, lubrifiants et fibres.

L'invention vise à proposer une composition comprenant des matières premières durables et recyclables pour former un matériau écologiquement cohérent facilement transformable en pièce finie de qualité supérieure.

A ses fins, l'invention porte sur une composition pour former un matériau durable comprenant une matrice de polymère thermoplastique comprenant du polyamide PA11 selon un pourcentage compris entre 60 et 99.9% en poids de masse totale et au moins une charge.

Selon l'invention, la au moins une charge comprend des fibres de byssus selon un pourcentage compris entre 0.1 et 20%, de préférence entre 0.5 et 10% en poids de masse totale. Le taux de fibres de byssus est adapté pour répondre aux caractéristiques techniques voulues de la pièce finie fabriquée à partir de la composition selon l'invention.

L'invention porte également sur une composition pour former un matériau durable comprenant une matrice de polymère thermoplastique, la composition comprenant du polyamide PA11 selon un pourcentage compris entre 60 et 95% en poids de masse totale et au moins une charge comprenant des fibres de byssus selon un pourcentage compris entre 1 et 20% en poids de masse totale.

Au sens de l'invention, l'expression « en poids de masse totale » s'entend « en poids de masse totale de la composition ».

Le byssus est un ensemble de fibres naturelles sécrétées par certains mollusques bivalves et qui leur permet d'adhérer au substrat. Le byssus, parfois appelé soie marine, se présente sous forme de fibres élastiques qui sont résistantes à l'eau, aux rayons ultraviolets et au sel. Les fibres de byssus présentent des caractéristiques ignifuges et une résistance remarquable aux forces de torsion et d'arrachement. Ainsi, l'utilisation de fibres de byssus permet de former un matériau performant aux propriétés remarquables. Selon l'utilisation d'une pièce finie obtenue à partir d'une composition comportant du polyamide PA11 et des fibres, les fibres de byssus peuvent apporter des caractéristiques plus performantes en comparaison à d'autres fibres biosourcées d'origine animale, végétale ou encore minérale comme le lin, le chanvre ou encore la laine.

Le byssus est constitué principalement de protéines (fibroïne et autres protéines structurales) lui conférant des propriétés mécaniques remarquables. La structure microfibrillaire du byssus a une capacité à absorber l'eau et à former des interfaces solides avec les matrices polymères. Les fibres de byssus ont un véritable potentiel en plasturgie en raison de leurs propriétés mécaniques uniques.

Les fibres de byssus sont utilisées dans l'invention en tant que charge de renforcement. Les fibres de byssus présentent en effet une résistance à la traction comparable à celle des fibres de verre.

Mélanger les fibres de byssus avec du polyamide PA11 permet également d'améliorer la rigidité et la résistance à l'impact du matériau formé par cette composition. Une réduction de la densité globale par rapport à un polyamide PA11 non chargé a également été observée.

Incorporer des fibres de byssus améliore la stabilité thermique de la matrice de polymère thermoplastique et notamment du polyamide PA11 et renforce la résistance à des températures élevées. Cette caractéristique est particulièrement avantageuse pour la mise en forme du matériau obtenu, induisant une meilleure fluidité du matériau et augmentant la qualité de la pièce finie.

Les fibres de byssus possèdent des caractéristiques ignifuges intéressantes. Leurs structures naturelles induisent une bonne résistance à la chaleur, tout en réduisant la propagation des flammes.

La température de dégradation des fibres de byssus est élevée, de l'ordre de 220°C, la température de carbonisation des fibres de byssus est élevée, de l'ordre de 350°C. Les fibres de byssus intégrées au PA11 créent une synergie pour former un matériau composite qui résiste à des températures élevées. Les fibres de byssus sont un choix idéal pour les applications où la sécurité incendie est primordiale telles que pour le bâtiment, l'électrique ou encore l'aéronautique.

Les fibres de byssus incorporées permettent également de modifier l'état de surface des pièces finies obtenues à partir d'une composition selon l'invention, qui s'affranchit ainsi de l'image du plastique conventionnel.

De plus, le byssus est un déchet et une ressource disponible peu utilisée ce qui est très intéressant d'un point de vue écologique.

Bien que présentant des avantages pour la composition selon l'invention comprenant un taux d'incorporation des fibres de byssus compris entre 0.1 et 20%, un taux préférentiel d'incorporation des fibres de byssus est compris entre 0.5 et 10% en poids de masse totale.

Un taux d'incorporation des fibres de byssus inférieur à 0.5% en poids de masse totale ne permet pas d'obtenir les meilleurs atouts combinés des fibres de byssus cités ci-dessus, à savoir les caractéristiques ignifuges, la stabilité thermique, la résistance à la chaleur tout en réduisant la propagation des flammes, ainsi que la hausse de la résistance à la traction, de la rigidité, de la résistance à l'impact et enfin la réduction de la densité globale.

Un taux d'incorporation des fibres de byssus supérieur à 10% en poids de masse totale augmente considérablement la viscosité du mélange, rendant plus difficile son écoulement dans la vis de l'injecteur et dans la cavité du moule. De plus, les zones difficiles d'accès du moule peuvent ne pas être complètement remplies, entraînant des défauts de surface ou des cavités internes. Le byssus peut s'agglomérer et former des amas qui obstruent les canaux d'alimentation et les buses d'injection.

Une quantité trop importante de fibres de byssus peut ainsi accélérer l'usure des vis d'injection, des buses et des moules.

De plus, un taux trop élevé de fibres de byssus entraîne une mauvaise dispersion des fibres de byssus induisant des variations de propriétés mécaniques au sein de la pièce finie telles que l'apparition de fissures, ainsi qu'une fragilisation du matériau. Cela peut aussi amener à un état de surface fibré de la pièce finie non uniforme et dégradé visuellement.

Un excès des fibres de byssus peut limiter la surface d'interface disponible pour une bonne adhésion entre les charges et la matrice, réduisant ainsi la qualité de l'interface byssus-et polyamide PA11. Ceci peut entraîner la formation de bulles d'air à l'intérieur du matériau, réduisant ainsi sa résistance mécanique et sa durabilité.

Selon une caractéristique de l'invention, la matrice de polymère thermoplastique comprend uniquement du polyamide PA11.

Le polyamide PA11 est une référence incontournable dans le domaine des polyamides hautes performances.

Selon encore une autre caractéristique de l'invention, la matrice de polymère thermoplastique comprend uniquement du polyamide PA11 biosourcé.

Ainsi toutes les matières premières utilisées dans la composition selon l'invention peuvent être biosourcées. Une pièce finie produite à partir d'une telle composition est écologiquement cohérente.

Selon une autre caractéristique de l'invention, la matrice de polymère thermoplastique comprend uniquement du polyamide PA11 sans halogène et ignifugé.

L'utilisation de polyamide PA11 sans halogène et ignifugé permet de proposer un matériau avec des caractéristiques renforcées.

Le polyamide PA11 existe sous diverses formes, chacune présentant des caractéristiques intrinsèques spécifiques. Son indice de fluidité ou sa viscosité peuvent notamment varier d'une qualité à l'autre. Par exemple, un PA11 présentant un indice de fluidité de 30 cm³/10 min facilite les opérations d'injection. Ainsi, le choix du grade de PA11 peut être effectué en fonction des exigences du procédé de mise en forme envisagé.

De plus, certains grades de PA11 présentant une viscosité plus faible tels que le « BMNO TLD » permettent d'utiliser un pourcentage plus important de fibres de byssus allant jusqu'à 20% tout en gardant une composition apte à une étape d'injection pour mettre en forme le matériau.

Selon une forme de réalisation de l'invention, les fibres de byssus sont issues du byssus de moule ayant subi une étape de micronisation.

Les fibres de byssus de moule se présentent sous la forme de filaments bruns, qui deviennent dorés au soleil. L'étape de micronisation permet notamment de diminuer la granulométrie du byssus de moule. Une fois transformé, le byssus de moule est un matériau remarquable.

Selon une caractéristique de l'invention, les fibres de byssus comprennent une granulométrie comprise entre 1 et 1000µm, de préférence entre 1 et 500µm, et encore de préférence entre 1 et 250µm.

Selon une autre forme de réalisation de l'invention, la composition comprend également une deuxième charge selon un pourcentage compris entre 1 et 30% en poids de masse totale.

Selon une forme de réalisation de l'invention, la deuxième charge comprend du carbonate de calcium.

Le carbonate de calcium (CaCO3) est une matière première naturelle d'origine minérale telle que du marbre ou issue de la biomasse telle que des coquilles d'huitre. La poudre de carbonate de calcium ultrafine comporte de bonnes propriétés de dispersion.

L'ajout de carbonate de calcium présente de nombreux avantages tels que la hausse de la ductilité, l'amélioration de l'isotropie, la réduction du gauchissement du matériau durable formé à partir de la composition selon l'invention.

Par rapport à d'autres charges minérales telles que la wollastonite ou le kaolin, le carbonate de calcium utilisé avec du polyamide PA11 permet d'augmenter la résistance à l'impact. De plus son utilisation permet de réduire les coûts de formulation pour la préparation de la composition selon l'invention.

L'utilisation de carbonate de calcium permet également de réduire l'empreinte carbone globale et les coûts de formulation.

De plus le carbonate de calcium joue un rôle d'agent nucléant important. Il permet de raccourcir le cycle de moulage, améliorer la transparence, la résistance à la traction, la rigidité, la ténacité et d'autres propriétés physiques et mécaniques des produits en accélérant la vitesse de cristallisation et augmentant la densité de cristallisation du polymère lors de son refroidissement.

L'invention porte également sur un procédé de fabrication d'un matériau durable à partir d'une composition selon l'invention comprenant les étapes suivantes :
- Sécher et microniser la au moins une charge,
- Mélanger au moins la au moins une charge et les polymères thermoplastiques, et
- Extruder le mélange obtenu.

Selon une forme de réalisation, l'extrudât ainsi obtenu est découpé en granulés réguliers d'environ 3 à 4mm. D'autres mise en forme de l'extrudât sont possibles dans le cadre de l'invention.

Selon une variante de réalisation de l'invention, le procédé de fabrication d'un matériau durable selon l'invention comprend une étape supplémentaire avant l'étape d'extrusion : Ajouter un colorant. Selon un pourcentage de 1 à 15% en poids de masse totale.

L'ajout d'un colorant, de préférence naturel, permet de faire varier la couleur et le rendu du matériau obtenu et de la pièce finie après transformation.

L'invention concerne également une utilisation d'une composition selon l'invention pour la fabrication d'un matériau durable destiné à former une pièce finie. L'invention trouve un intérêt particulier pour former par exemple un contenant. Une fois le matériau durable obtenu à partir d'une composition selon l'invention, différents procédés de mise en forme, compatibles dans le cadre de l'invention, permettent d'obtenir la pièce finie voulue.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Différents exemples de réalisation sont décrits ci-dessous mais nullement limitatifs pour la portée de l'invention.

Selon un premier exemple de réalisation, une composition selon l'invention, nommée ci-après composition R-GFI-T1, comprend une matrice de PA11, une charge d'origine organique, à savoir des fibres de byssus et une charge d'origine minérale, à savoir du carbonate de calcium dans les proportions suivantes :
- entre 90% et 98% en poids de masse de PA11,
- entre 1% et 4% en poids de masse de fibres de byssus, et
- entre 0% et 6% en poids de masse de carbonate de calcium.

Le choix de la composition intrinsèque du PA11 peut se faire en anticipant le procédé de mise en forme de la composition.

À titre d'exemple, pour l'étape d'injection du matériau, on peut utiliser un PA11 tel que le « RILSAN^{®} PA 11 BMNO » ou le « BMNO TLD », notamment lorsqu'une conformité alimentaire est requise. Le matériau doit présenter une excellente fluidité à l'état fondu (« BMNO TLD » présente par exemple un indice de fluidité de 30 cm³/10 min) afin de garantir un remplissage rapide et complet du moule. Il doit également offrir une bonne stabilité thermique, puisqu'il est soumis à une montée en température rapide et élevée. Une granulométrie uniforme (3 à 5 mm) ainsi qu'un taux d'humidité très faible (< 0,1 %) sont également requis.

Pour une étape d'extrusion de la composition, on pourra utiliser un PA11 tel que « RILSAN^{®} PA 11 BESNO TL » ou « BESVOAFDA » pour les applications alimentaires. Le polymère doit présenter une viscosité faible, stable et constante dans le temps (par exemple, l'indice de fluidité de 1 cm³/10 min pour « BESNO TL »), car le procédé d'extrusion est continu. La matière doit s'écouler de manière régulière, sans à-coups, tout en conservant une résistance suffisante à l'état fondu afin de maintenir la géométrie du profil extrudé.

Pour une étape de rotomoulage, le PA11 retenu peut être « RILSAN^{®} PA 11 ROTO11 ». Ce matériau se présente sous forme de poudre d'environ 500 microns, offrant une excellente aptitude à fondre et à se répartir uniformément sur les parois du moule. Le polymère doit également présenter une très bonne stabilité thermique, les cycles de chauffage étant particulièrement longs dans ce procédé.

Selon une première étape de préparation, les fibres de byssus sont séchées afin de respecter les taux d'humidité recommandés avant la mise en forme, à savoir un taux d'humidité inférieur à 0.1 %.

Cette étape de séchage est suivie par une étape de micronisation pour les deux charges.

Afin de préparer la première composition, le carbonate de calcium et les fibres de byssus séchés et micronisés sont mélangés puis introduits avec le polyamide PA11 dans un mélangeur.

Ensuite, le mélange obtenu est placé dans une extrudeuse en vue de son extrusion. L'extrudât est ensuite broyés en granulés réguliers d'environ 3 à 4mm.

Il est possible d'ajouter un colorant lors du mélange des matières premières avant l'étape d'extrusion afin d'obtenir un matériau durable coloré. Les colorants utilisés sont très préférentiellement des colorants naturels ne présentant pas de risque d'allergie. Le pourcentage de colorant rajouté au mélange varie selon la couleur et le rendu souhaité. Le taux de colorant peut varier de 1 à 15% en poids de masse totale.

Le matériau durable obtenu à partir de la composition R-GFI-T1 selon l'invention est ensuite mis en œuvre.

Différents procédés de mise en forme du matériau durable obtenu par la composition selon l'invention sont possibles, tels que l'injection, l'impression 3D, l'extrusion ou encore le thermoformage.

Selon une première forme de mise en œuvre de l'invention, la composition R-GFI-T1 est injectée pour former une plaque de dimension 10cm par 15cm selon un procédé d'injection connu.

Une telle pièce finie sous forme d'une plaque présente un aspect fibré de la matière de bonne qualité avec un rendu fini régulier et satisfaisant.

Selon une deuxième forme de mise en œuvre de l'invention, la composition R-GFI-T1 est injectée pour former une pièce automobile selon un procédé d'injection connu.

La qualité de la pièce finie obtenue est également satisfaisante. L'injection s'est faite correctement.

Le Tableau 1, ci-après, détaille les propriétés d'une pièce finie, sous forme d'éprouvette test, mise en forme à partir du matériau durable obtenu à partir de la composition R-GFI-T1.

**[Tableau 1]**

| **Propriétés physiques** | | |
|---|---|---|
| Indice de fluidité (220°C / 2,16kg) | 20 g/10min | ISO 1133 |

| **Propriétés mécaniques** | | |
|---|---|---|
| Module d'élasticité (traction) | 1100 Mpa | ISO 527-1 |
| Contrainte au seuil (traction) | 39,2 Mpa | ISO 527-1 |
| Contrainte à la rupture (traction) | 31,8 Mpa | ISO 527-1 |
| Allongement à la rupture (traction) | 42% | ISO 527-1 |
| Module (flexion) | 1020 Mpa | ISO 178 |
| Allongement à la rupture | >12% | ISO 527-1 |
| Contrainte au seuil | 36.5 Mpa | ISO 178 |
| Choc Charpy - non entaillé (23°C / 2J) | 23 kJ/m² | ISO 179-1/1fU |
| Choc Charpy - entaillé (23°C /0,5J) | 3,3kJ/m² | ISO 179-1/1fU |

| **Propriétés thermiques** | | |
|---|---|---|
| Retrait thermique post-moulage (Smp) | 1,17% | INS-IR&D-19 |

Des essais de caractérisations mécaniques sur des pièces finies injectées à partir de la composition R-GFI-T1 ont été menés afin de les comparer avec les mêmes pièces initialement fabriquées en UR3450 (élastomère de polyuréthane) et en F190 (polyuréthane). Les résultats de ces essais sont présentés dans le Tableau 2 ci-dessous.

**[Tableau 2]**

| **Matériau** | **Ensemble R-GFI-T1** | | | **Ensemble UR 3450/F19** | | |
|---|---|---|---|---|---|---|
| N° essai | 1 | 2 | 3 | 1 | 2 | 3 |
| Force de traction max (N) | 2163 | 2099 | 2496 | 656 | 634 | 266 |
| Force moyenne de traction max (N) | 2253 | | | 519 | | |
| **Observation** | **Mode de rupture variable** | | | **Mode de rupture constant** | | |
| Force de flexion max | 199 | 144 | 131 | 57 | 47 | 37 |
| Force moyenne de flexion max (N) | 158 | | | 47 | | |
| **Observation** | **Aucune rupture pour test de flexion** | | | **Rupture pour test de flexion** | | |

Il est ainsi observé une force de traction maximale quatre fois supérieure pour les pièces finies injectées à partir de la composition R-GFI-T1.

Il est également observé une force de flexion maximale quatre fois supérieure pour les pièces finies injectées à partir de la composition RGFI-T1 sans rupture atteinte.

Des essais ont également été réalisés sur un matériau composé uniquement de PA11 100% biosourcé. Toutefois, l'utilisation du PA11 biosourcé seul donne des résultats peu concluants pour l'obtention d'un matériau destiné à un usage spécifique. Le PA11 100% biosourcée et chargé selon l'invention permet d'obtenir une composition apte à différentes mises en œuvre telles que l'injection ou le rotomoulage.

Selon un deuxième exemple de réalisation, une composition selon l'invention, nommée ci-après composition R-GFI-T2, comprend une matrice de PA11, une charge d'origine organique, à savoir des fibres de byssus et une charge d'origine minérale, à savoir du carbonate de calcium dans les proportions suivantes :
- entre 80% et 90% en poids de masse de PA11,
- ente 1% et 4% en poids de masse de fibres de byssus, et
- entre 6% et 19% en poids de masse de carbonate de calcium.

Le procédé de fabrication pour obtenir un matériau durable à partir de la composition R-GFI-T2 est le même pour la composition R-GFI-T1 décrit précédemment.

La composition R-GFI-T2 est également injectée pour former deux pièces finies.

Il est observé que la présence de carbonate de calcium selon un taux d'incorporation plus élevé a une incidence positive sur l'aspect de la pièce finie.

Il est également observé que plus le taux d'incorporation de carbonate de calcium est élevé, plus la teinte naturelle s'éclaircit.

Selon un troisième exemple de réalisation, une composition selon l'invention, nommée ci-après composition R-GFI-T3, comprend une matrice de PA11, une charge d'origine organique, à savoir des fibres de byssus et une charge d'origine minérale, à savoir du carbonate de calcium dans les proportions suivantes :
- 74% en poids de masse de PA11,
- 20% en poids de masse de fibres de byssus, et
- 6% en poids de masse de carbonate de calcium.

La composition R-GFI-T3 permet d'accroitre la visibilité des fibres. De plus, l'absence de talc permet son utilisation pour des pièces fonctionnelles dans le domaine du nautisme.

Selon un quatrième exemple de réalisation, une composition selon l'invention, nommée ci-après composition R-GFI-T4, comprend une matrice de PA11, une charge d'origine organique, à savoir des fibres de byssus et une charge d'origine minérale, à savoir du carbonate de calcium dans les proportions suivantes :
- 74% en poids de masse de PA11,
- 17% en poids de masse de fibres de byssus, et
- 9% en poids de masse de talc.

La composition R-GFI-T4 permet également d'améliorer la visibilité des fibres. Elle présente en outre une meilleure résistance aux chocs, ce qui la rend adaptée à la réalisation de pièces d'aspect dans le secteur automobile.

Bien entendu, diverses autres modifications peuvent être apportées à l'invention dans le cadre des revendications annexées.

## Revendications

1. Composition pour former un matériau durable comprenant une matrice de polymère thermoplastique comprenant du polyamide PA11 selon un pourcentage compris entre 80 et 99.9% en poids de masse totale et au moins une charge, **caractérisée en ce que** la au moins une charge comprend des fibres de byssus selon un pourcentage compris entre 0.1 et 20%, de préférence entre 0.5 et 10% en poids de masse totale.

2. Composition selon la revendication précédente dans laquelle la matrice de polymère thermoplastique comprend du polyamide PA11biosourcé.

3. Composition selon l'une des revendications précédentes dans laquelle la matrice de polymère thermoplastique comprend du polyamide PA11 sans halogène et ignifugé.

4. Composition selon l'une des revendications précédentes dans laquelle la matrice de polymère thermoplastique comprend uniquement du polyamide PA11.

5. Composition selon l'une des revendications précédentes dans laquelle les fibres de byssus sont issues du byssus de moule ayant subi une étape de micronisation.

6. Composition selon l'une des revendications précédentes dans laquelle les fibres de byssus comprennent une granulométrie comprise entre 1 et 1000µm, de préférence entre 1 et 500µm, et encore de préférence entre 1 et 250µm.

7. Composition selon l'une des revendications précédentes comprenant également une deuxième charge selon un pourcentage compris entre 1 et 30% en poids de masse totale.

8. Composition selon la revendication précédente dans laquelle la deuxième charge comprend du carbonate de calcium.

9. Procédé de fabrication d'un matériau durable à partir d'une composition selon l'une des revendications précédentes comprenant les étapes suivantes :
- Sécher et microniser la au moins une charge,
- Mélanger au moins la au moins une charge et la matrice de polymère thermoplastique, et
- Extruder le mélange obtenu.

10. Utilisation d'une composition selon l'une des revendications 1 à 8 pour la fabrication d'un matériau durable destiné à former une pièce finie.
